# EUROPEAN PATENT SPECIFICATION

(11) **EP 3 283 310 B1**
(45) Date of publication and mention of the grant of the patent: **07.08.2019**
(21) Application number: 16717333.5
(22) Date of filing: 13.04.2016
(51) Int. Cl.: B60G 17/04, B60G 9/02

(54) **A SUSPENSION SYSTEM FOR A VEHICLE**
AUFHÄNGUNGSSYSTEM FÜR EIN FAHRZEUG
SYSTÈME DE SUSPENSION POUR UN VÉHICULE

(30) Priority: 17.04.2015 IT MO20150083
(43) Date of publication of application: 21.02.2018
(73) Proprietor: CNH Industrial Italia S.P.A., 10135 Turin (IT)
(72) Inventor: GABIATI, Giovanni, 10135 Torino (TO) (IT); REI, Claudio, 10010 Banchette (TO) (IT); BENEVELLI, Alessandro, 42020 Albinea Reggio Nell"Emilia (IT); MORSELLI, Riccardo, 41057 San Vito Di Spilamberto (Modena) (IT); IELUZZI, Michele, 10137 Turin (IT)
(74) Representative: CNH Industrial IP Department
(86) International application number: PCT/EP2016/058123
(87) International publication number: WO 2016/166161

(56) References cited:
- EP-A1- 1 698 497
- WO-A1-2007/098559
- FR-A1- 2 625 711
- US-A- 5 269 556
- US-A- 5 915 701
- US-A1- 2005 258 607
- US-A1- 2009 051 130
- US-A1- 2010 044 976

## Description

The invention relates to a suspension system for a vehicle, the suspension system being provided with a damping device which is operable when the vehicle is subjected to external forces which act to change the position of its chassis. The suspension system according to the invention is particularly suitable for being associated to a front axle of an industrial or agricultural vehicle such as a tractor or the like.

The front axle of known tractors is commonly provided with a passive suspension system, comprising a pair of hydraulic cylinders, located at opposite sides with respect to a longitudinal axis of the vehicle. Each cylinder has a piston chamber and a rod chamber. The rod chambers are connected to a common accumulator, whereas each piston chamber is connected to a respective accumulator.

The rod chambers of the cylinders are furthermore connected to a supply circuit provided in a leveling manifold. The supply circuit basically comprises a valve allowing oil to be supplied to the suspension system, and two levelling valves allowing the position of the cylinder pistons to be controlled.

Furthermore, a semi-locking valve is interposed between the piston chambers and the corresponding accumulators. When the semi-locking valve is in an open position, the piston chambers are in direct communication with each other and with the corresponding accumulators. When the semi-locking valve is in a closed position, the piston chambers are isolated from the respective accumulators and the front axle is blocked in its current configuration, i.e. the suspension system is not working. This is useful in particular operation conditions, e.g. when the operator is loading something on the tractor.

Although the known suspension systems have good performances at low speed, they do not provide sufficient comfort and safety when the speed is relatively high, particularly during double lane change or cornering. In these driving conditions, known suspension systems may provide insufficient rolling stability.

This drawback is particularly relevant if it is considered that high speeds, up to 60 km/h, are more and more often required to tractors.

US5915701 discloses a suspension system for a vehicle related to controlling the movement of the wheels relative to the vehicle body when traversing uneven surfaces and while turning at speed, but this system does not provide a good control for safety and comfort for the driver particularly at high speed.

An object of the invention is to improve known suspension systems, particularly for agricultural or industrial vehicles such as tractors.

Another object is to provide a suspension system which is capable of increasing safety and comfort for the driver, particularly at relatively high speeds.

Another object is to provide a suspension system which is capable of increasing rolling stability.

A further object is to increase safety of the vehicle and comfort for the driver, when he or she carries out critical operations such as cornering or double lane change.

A still further object is to provide a suspension system for a vehicle, which increases drivability of the vehicle.

According to the invention, there is provided a suspension system for a vehicle, the suspension system comprising:
- a first cylinder and a second cylinder positionable at opposite sides of an axle of the vehicle,
- a first accumulator connectable to a chamber of the first cylinder by a first connecting line,
- a second accumulator connectable to a chamber of the second cylinder by a second connecting line,
- a common accumulator connectable to a further chamber of each cylinder,
wherein the first connecting line and the second connecting line are connected to each other by a conduit, a selective communication element being arranged along said conduit, the selective communication element being operable between an open position in which a common pressure is present inside the chambers, and a closed position in which the first cylinder and the second cylinder can be controlled independently of each other.

Owing to the selective communication element, the first cylinder and the second cylinder can be controlled independently of each other. In other words, the first cylinder can be either connected to the first accumulator or isolated from the first accumulator, irrespective of whether the second cylinder is either connected to the second accumulator or isolated therefrom. As a consequence, a piston of the first cylinder can be positioned independently of a piston of the second cylinder, particularly in response to a change of orientation of a vehicle chassis relative to the axle due to a lateral acceleration on the chassis. An anti-rolling force can thus be provided, which is helpful for example in cases of cornering or double lane change of the vehicle, particularly at high speed. Hence, the rolling stability of the vehicle can be significantly increased.

In an embodiment, the first connecting line and the second connecting line are connected to each other by a further conduit allowing fluid communication between said chamber of the first cylinder and said chamber of the second cylinder at a flow rate which is lower than the flow rate through said conduit in the open position.

The further conduit allows fluid communication between the first and second cylinder even if the selective communication element is in a closed position, at a flow rate which is reduced with respect to the flow rate which can be detected in said conduit when the selective communication element is in an open position. The further conduit allows the standard position of the vehicle axle to be restored after a certain period of time, even in case of failure of the selective communication element.

However, the further conduit does not affect a quick response of the first and second cylinders to an external force acting on the vehicle chassis. This is due to the reduced flow rate of the fluid through the further conduit, with respect to the flow rate of the fluid passing through the selective communication rate.

Hence, safety and comfort for the driver can be improved, as well as drivability, particularly when the vehicle is running at a relatively high speed.

In an embodiment, a first damping valve is arranged along the first connecting line and a second damping valve is arranged along the second connecting line, each damping valve being controlled by a control unit so as to be openable proportionally to an input signal.

A common damping valve may be interposed between the common accumulator and the cylinders, the common damping valve being controlled by the control unit so as to be openable proportionally to an input signal.

By properly controlling the first damping valve, the second damping valve, and the common damping valve, several functions may be performed which improve control of the vehicle by the driver at high speed. In particular, an anti-rolling control strategy, a longitudinal control strategy, an anti-bump control strategy and a vertical control strategy can be adopted.

The invention will be better understood and carried out with reference to the attached drawings, which show some exemplifying and non-limiting embodiments thereof, in which:
Figure 1 is a schematic front view showing the front axle of a tractor;
Figure 2 is a diagram showing a hydraulic circuit of a suspension system of the tractor;
Figure 3 is a schematic view from above showing the tractor while turning to the right;
Figure 4 is a schematic view from behind showing how the chassis of the tractor moves relative to the axle while the tractor is turning to the right;
Figure 5 shows a portion of the diagram of Figure 2, in a condition in which the tractor is turning to the right;
Figure 6 is a flow chart showing how the hydraulic circuit of Figure 2 is controlled if the tractor is subjected to a lateral acceleration;
Figure 7 is a schematic perspective view showing a portion of the front part of the tractor during a braking phase;
Figure 8 shows a portion of the diagram of Figure 2, in a condition in which the tractor is braking;
Figure 9 is a flow chart showing how the hydraulic circuit of Figure 2 is controlled if the tractor is subjected to a longitudinal acceleration;
Figure 10 is a schematic view from behind showing a portion of the front part of the tractor during a rebound phase;
Figure 11 shows a portion of the diagram of Figure 2, in a condition of rebound motion;
Figure 12 is a flow chart showing the hydraulic circuit of Figure 2 when anti-bump control is applied.

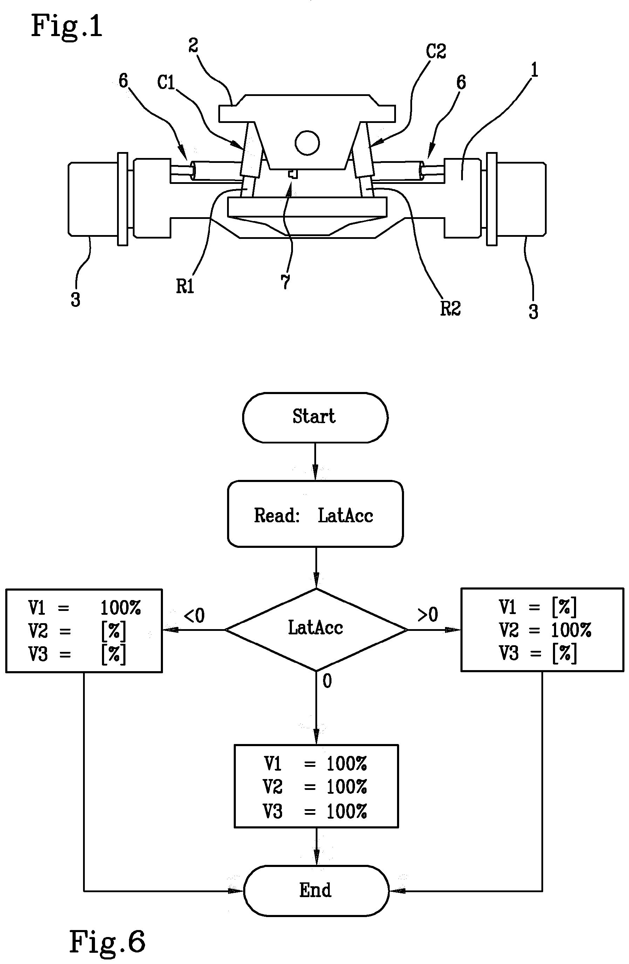

Figure 1 shows schematically an axle 1 of a vehicle, particularly an industrial or agricultural vehicle, such as a tractor. The axle concerned may be a front axle of the vehicle. The vehicle comprises a chassis which is not shown in the drawings, the chassis including an axle support 2 to which the axle 1 is connected. Two hubs 3 are provided at opposite ends of the axle 1, the hubs 3 being intended for supporting respective wheels of the vehicle, which are not shown in the drawings.

A suspension system is provided between the wheels and the chassis of the vehicle. The suspension system comprises a first cylinder C1 and a second cylinder C2, which are arranged at opposite sides with respect to a central, longitudinal axis of the vehicle. Each of the cylinders C1, C2, which can be of the hydraulic type, contains a fluid.

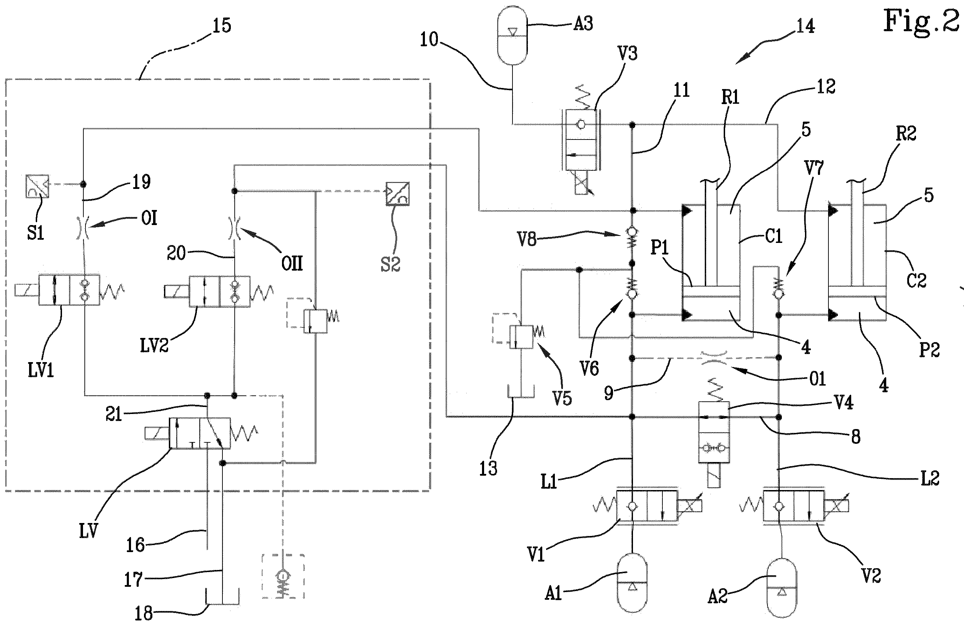

As shown in Figure 2, inside each cylinder C1, C2 a respective piston P1, P2 is provided, which is connected to a rod R1, R2 protruding out of the corresponding cylinder C1, C2. Each piston P1, P2 defines, inside the corresponding cylinder C1, C2, a chamber 4 and a further chamber 5. The chamber 4 is located at the piston side of the corresponding cylinder C1, C2, whereas the further chamber 5 is located at the rod side.

In the example shown in Figure 1, the rods R1, R2 are hinged to the axle 1 of the vehicle, whereas the cylinders C1, C2 are connected to the axle support 2. A different arrangement of the cylinders C1, C2 and of the rods R1, R2 may nevertheless be provided.

A steering mechanism 6 is associated to each wheel. The steering mechanism 6 is of known type and will not be described in detail herebelow.

As shown in Figure 1, the vehicle is provided with a position sensor 7 supported by the chassis for sensing the position, particularly the height of the chassis relative to the ground.

As shown in Figure 2, the suspension system further comprises a damping circuit 14 which operates when the speed of the vehicle overcomes a preset threshold in order to ensure a damping function in case the chassis moves relative to the wheels owing to the suspension system.

The damping circuit 14 comprises a first accumulator A1 connectable to a chamber of the first cylinder C1, particularly the chamber 4 arranged at the piston side. A second accumulator A2 can be connected to a chamber of the second cylinder C2, particularly the chamber 4 arranged at the piston side.

In detail, the first accumulator A1 is connected to the chamber 4 of the first cylinder C1 by a first connecting line L1, whereas the second accumulator A2 is connected to the chamber 4 of the second cylinder C2 by a second connecting line L2.

The chambers 4 of the cylinders C1, C2 are connected to each other by a conduit 8. The conduit 8 is in particular arranged between the first connecting line L1 and the second connecting line L2. A selective communication element, particularly conformed as a by-pass valve V4, is arranged along the conduit 8 in order to either close or open the conduit 8. The by-pass valve V4 can be either in an open position, in which it allows fluid to pass from the chamber 4 of the first cylinder C1 to the chamber 4 of the second cylinder C2 or vice versa, on in a closed position, in which it closes the conduit 8.

As will be explained in detail below, the by-pass valve V4 allows the first cylinder C1 to be controlled independently of the second cylinder C2.

A further conduit 9 is interposed between the chambers 4 of the cylinders C1, C2 to connect these chambers. The further conduit 9 may be arranged between the first connecting line L1 and the second connecting line L2. The further conduit 9 allows permanent fluid communication between the chambers 4 of the cylinders C1, C2. However, fluid flows from the first cylinder C1 to the second cylinder C2 or vice versa through the further conduit 9 at a reduced flow rate, if compared with the flow rate through the conduit 8, when the by-pass valve V4 is in the open position. To this end, a narrowing in cross section is provided along the further conduit 9. The narrowing in cross section can be provided for example as an orifice O1.

The orifice O1 may be arranged in parallel to the by-pass valve V4.

If there is a difference in fluid pressures between the chambers 4 of the two cylinders C1 and C2, the orifice O1 allows the chambers 4 to communicate, so that the same pressure can be slowly reached inside the two chambers 4, even if the conduit 8 is closed. In other words, the orifice O1 ensures that no pressure differences exists between the two chambers 4 in stationary conditions.

The damping circuit 14 further comprises a common accumulator A3, connectable to both the further chambers 5 of the cylinders C1, C2, i.e. to both the chambers arranged at the rod side of the cylinders C1, C2. In particular, a common line 10 leads out of the common accumulator A3, the common line 10 then branching into a first line 11 and into a second line 12 respectively directed towards the further chambers 5 of the first cylinder C1 and of the second cylinder C2.

In the example shown in the drawings, a damping valve is associated with each accumulator.

In particular, a first damping valve V1 is interposed between the first accumulator A1 and the first cylinder C1. The first damping valve V1 can be arranged along the first connecting line L1 between the first accumulator A1 and the conduit 8.

A second damping valve V2 is interposed between the second accumulator A2 and the second cylinder C2. The second damping valve V2 can be arranged along the second connecting line L2 between the second accumulator A2 and the conduit 8.

A further damping valve V3 is arranged along the common line 10 downstream of the common accumulator A3.

The damping valves V1, V2, V3 are proportional valves, i.e. they can be controlled by a control unit of the vehicle so as to be in a fully opened configuration or in a plurality of partially closed configurations, in each of which the degree of closure is proportional to an input signal, up to a fully closed position. As will be discussed in detail later, by properly controlling the damping valves V1, V2, V3, a damping force can be introduced when the suspension system is working as a reaction to a movement of the chassis.

A tank 13 for the fluid is furthermore provided.

A first check valve V6 is interposed between the chamber 4 of the first cylinder C1 and the tank 13. Similarly, a second check valve V7 is interposed between the chamber 4 of the second cylinder C2 and the tank 13.

Finally, a common check valve V8 is interposed between the tank 13 and the further chambers 5 of both the first cylinder C1 and the second cylinder C2. The check valves V6, V7, V8 serve to avoid undesirable flow-backs of fluid towards the cylinders C1 and C2.

A pressure relief valve V5 is provided upstream of the tank 13. The pressure relief valve V5 is configured to open in case an excessive pressure is reached. For this reason, the pressure relief valve V5 is set at the highest pressure that can be accepted in the hydraulic circuit which has been described up to now. Thus, the pressure relief valve V5 avoids mechanical failure of the circuit, particularly due to hydraulic burst.

The damping valves V1, V2, V3, the by-pass valve V4, the orifice O1, the check valves V6, V7, V8, the pressure relief valve V5 and the accumulators A1, A2, A3 can be housed within a single manifold that can be defined as a damping manifold.

The suspension system further comprises a hydraulic circuit that has a levelling function, i.e. serves to manage height of the chassis above the ground. This hydraulic circuit can be housed within a levelling manifold 15.

A supply line 16 is provided for supplying pressurized fluid to the levelling manifold 15. A discharge line 17 allows fluid from the levelling manifold 15 to be discharged into a discharge tank 18.

Inside the levelling manifold 15 a duct 21 is obtained, which branches into a first conduit 19 directed towards the further chambers 5 (rod side) of the cylinders C1, C2 and a second conduit 20 directed towards the chambers 4 (piston side) of the cylinders C1, C2.

An input valve LV is arranged along the duct 21 for connecting the duct 21 either to the supply line 16 or to the discharge line 17.

A first by-pass valve LV1 is located along the first conduit 19, and a second by-pass valve LV2 is located along the second conduit 20. The by-pass valves LV1, LV2 can either open or close the corresponding conduit 19, 20, so that fluid can be supplied to the cylinders C1, C2 or discharged therefrom.

Depending on the status of the input valve LV, when the by-pass valves LV1 and LV2 are in an open position the chassis will be raised or lowered by the suspension system, thereby providing a levelling function.

Along the first conduit 19, downstream of the first by-pass valve LV1, a first orifice OI is provided. Similarly, along the second conduit 20, downstream of the second by-pass valve LV2, a second orifice OII is provided. The orifices OI, OII allow the levelling speed to be managed.

A first pressure sensor S1 is provided for detecting pressure inside the first conduit 19. A second pressure sensor S2 is similarly provided for detecting pressure inside the second conduit 20. The first pressure sensor S1 and the second pressure sensor S2 provide information which can be used to manage the pressure level inside the accumulators A1, A2, A3, in order to adjust stiffness and/or height of the suspension system.

The circuit housed inside the levelling manifold 15 is of known type and its operation will not described in greater detail in the following.

When the levelling function is carried out, the by-pass valve V4 is in the open position to ensure a symmetrical operation of the first cylinder C1 and of the second cylinder C2.

However, when the vehicle speed is greater than the preset threshold, the by-pass valve V4 is moved to the closed position in order to allow independent control of pressure inside the chambers 4 of the cylinders C1, C2, so that the damping circuit 14 can perform its damping function.

The damping circuit 14 provides first of all a lateral control on the chassis in order to minimize the rolling movement and speed.

This lateral control is activated when lateral acceleration LatAcc of the vehicle is detected, the lateral acceleration LatAcc being calculated on the basis of the steering angle of the vehicle and of the vehicle speed.

As an alternative, an accelerometer may be provided for detecting the lateral acceleration LatAcc, or the lateral acceleration LatAcc may be determined on the basis of other signals coming from a control unit of the vehicle.

An example will clarify how lateral control works.

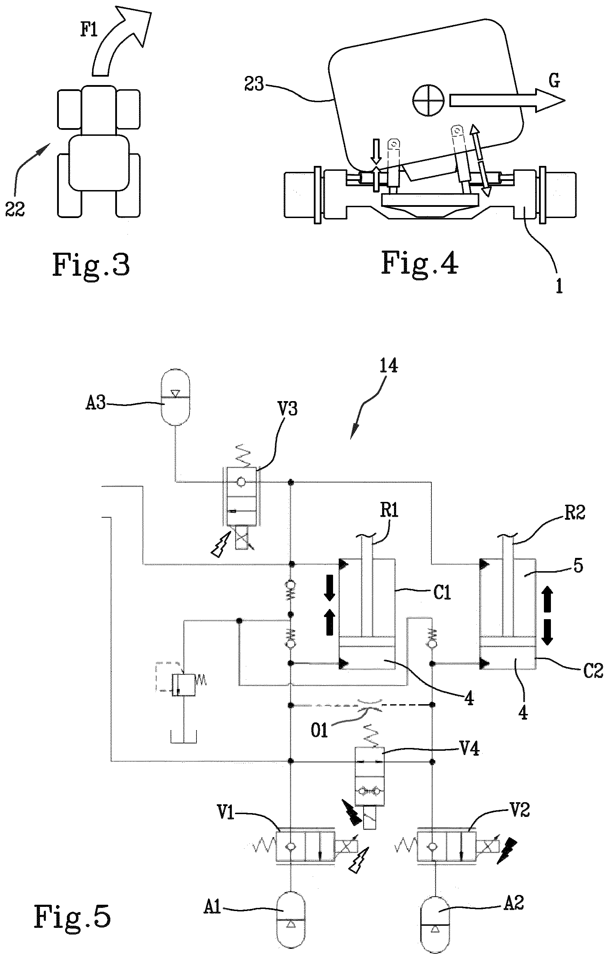

Figure 3 shows schematically a tractor 22 which is steering to the right with a narrow steering radius (right cornering), as indicated by the arrow F1. In this case, as shown in the rear view of Figure 4, the chassis 23 rotates counterclockwise relative to the wheels, due to the centrifugal force G. This causes the rod R1 to slide towards the inside of the first cylinder C1, whereas the rod R2 moves towards the outside of the corresponding second cylinder C2.

The damping valves V1, V2, V3 can be controlled electronically. In particular, the electrical current supplied to each damping valve V1, V2, V3 can be changed to change the position of a distributor element of each damping valve V1, V2, V3, thereby affecting the degree of closure of the corresponding damping valve V1, V2, V3. Each damping valve V1, V2, V3 can be in in a fully energized status, which means that the damping valve V1, V2, V3 (which is normally closed) is in a fully opened condition. Each damping valve V1, V2, V3 can also be in a controlled status, i.e. it may be partially opened, and its degree of closure (or degree of aperture, which is the same) is proportional to an input signal. In the case of lateral control, the input signal which controls the position of each damping valve V1, V2, V3 is the lateral acceleration LatAcc.

The by-pass valve V4 is normally open and can be fully energized to reach a fully closed position.

In Figure 5, which shows the damping circuit 14 in case of right cornering, the energized status of each valve V1, V2, V3, V4 is shown by a dark flash, whereas the controlled status is shown by a light flash.

In the speed range in which the lateral control is active, i.e. above the threshold speed, the by-pass valve V4 is fully energized, so as to move it into the closed position, thereby closing the conduit 8.

As already stated, the rod R2 of the second cylinder C2 is moving towards the outside of the second cylinder C2, so that the latter is reaching an extended configuration. The chamber 4 of the second cylinder C2 is increasing its volume and needs more fluid. The second damping valve V2 is therefore fully energized to be displaced into a fully opened position, in order to maximize the flow of fluid from the second accumulator A2 to the chamber 4 of the second cylinder C2 and to minimize pressure drop along the second connecting line L2.

The rod R1 of the first cylinder C1 is penetrating deeper inside the first cylinder C1, thereby causing fluid to flow from the chamber 4 towards the first accumulator A1. The first damping valve V1 is in a controlled status, i.e. it is moved from the closed position to a partially open position, the degree of aperture being proportional to the lateral acceleration LatAcc. Thus, the first damping valve V1 allows fluid to flow from the chamber 4 of the first cylinder C1 towards the first accumulator A1 in a controlled manner, thereby providing a damping action.

For similar reasons, also the third damping valve V3 is in a controlled status, which means that it is moved from the closed position to a partially open position, proportionally to the lateral acceleration LatAcc. A damping action can thus be performed, by controlling the flow of fluid from the further chamber 5 of the second cylinder C2 to the common accumulator A3.

The example that has been discussed above in connection with Figure 5 forms part of a lateral control strategy or anti-rolling control strategy that will now be described referring to Figure 6. The latter shows a sequence of actions that are performed by the control unit of the vehicle when the lateral control strategy is activated.

In Figure 6, when the symbol [%] is used in connection with one of the damping valves V1, V2, V3, then the valve is in a controlled status. If the symbol 100% is used, then the corresponding valve is in a fully energized status, i.e. completely opened.

First of all, the parameter LatAcc is read, which as already explained can be calculated on the basis of the steering angle and vehicle speed and is indicative of the lateral acceleration acting on the chassis.

A positive value of LatAcc, i.e. a value of LatAcc greater than zero, means that the chassis is rolling in a counterclockwise direction relative to the axle 1, which occurs when the vehicle is turning to the right. In this case, as explained above with reference to Figure 5, the first damping valve V1 and the third damping valve V3 are controlled to provide a damping action, whereas the second damping valve V2 is fully opened in order to prevent cavitation of the corresponding cylinder C2.

A negative value of LatAcc means that the chassis is rolling in a clockwise direction, which implies that the vehicle is turning to the left. In this condition, the first damping valve V1 is fully energized to be completely opened, thereby allowing fluid to flow from the chamber 4 of the first cylinder C1 to the first accumulator A1 with a minimized pressure drop. The second damping valve V2 and the third damping valve V3 are in a controlled condition, i.e. are opened proportionally to the lateral acceleration, in order to provide a damping action by controlling the fluid which flows from the chamber 4 of the second cylinder C2 towards the second accumulator A2 and from the further chamber 5 of the first cylinder C1 towards the common accumulator A3.

Finally, if LatAcc is zero, then the chassis is not rolling. In this case, all the damping valves V1, V2, V3 are fully energized, i.e. completely opened, and no damping action is performed. As an alternative, if LatAcc is zero, all the damping valves V1, V2, V3 can be controlled by setting the respective control current at a constant value in order to ensure an optimal damping action.

It is clear from above that, since the by-pass valve V4 closes direct communication between the chambers 4 of the cylinders C1, C2, the latter can be controlled independently of each other, for example by acting on the first damping valve V1 and on the second damping valve V2. Rolling motion of the chassis can thus be reduced, particularly in the case of cornering maneuvers or double lane change. More in general, drivability of the vehicle during transport is improved.

The orifice O1 does not affect independent control of the cylinders C1, C2 aimed at providing a damping action. The damping action is performed in short times, which - due to the small dimensions of the orifice O1 - are not sufficient to allow significant quantities of fluid to flow from the first cylinder C1 to the second cylinder C2 or vice versa through the orifice O1. The orifice O1 needs much longer times in order to ensure that the same pressure is reached inside the chambers 4 of both the cylinders C1 and C2.

In other words, the orifice O1 is inactive in transient conditions.

On the other hand, the orifice O1 is effective in stationary conditions, i.e. over relatively long periods, since it slowly brings pressure inside the chambers 4 of the cylinders C1 and C2 to a common value, thereby allowing the chassis to be brought back to a horizontal position relative to the ground, even if a single position sensor 7 is provided in a central region of the front axle 1 and the exact position of the pistons P1, P2 is not known. Thus, the orifice O1 ensures that the chassis is correctly positioned if the by-pass valve V4 is closed, for example because of failure or because the vehicle is running at high speed.

The damping circuit 14 may also be used for longitudinal control of the chassis position, i.e. when longitudinal acceleration is detected on the chassis. In this case, the actions performed by the damping circuit 14 are aimed at minimizing the pitch angle or inclination angle, i.e. the angle between the longitudinal axis of the chassis and the ground.

Longitudinal acceleration on the chassis is estimated on the basis of a number of parameters including vehicle speed, engine torque, brake status, driver's action on accelerator, driver changing gear or not, signals received from suitable accelerometers.

Longitudinal control may be active mainly during three phases:
- when the driver brakes the vehicle (braking phase),
- when the driver starts to increas the vehicle speed by acting on the accelerator pedal (tip on phase);
- when the driver starts to release the accelerator pedal (tip off phase).

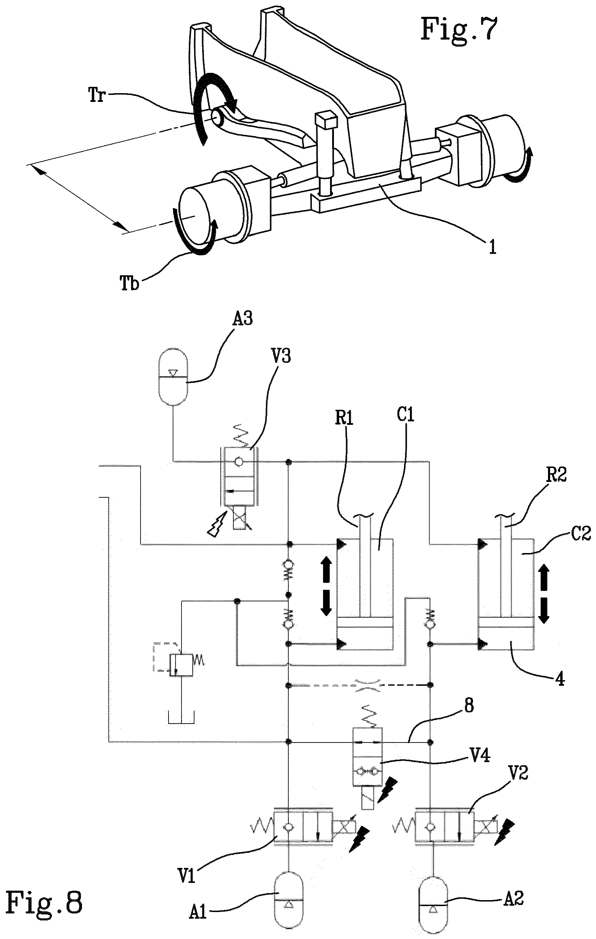

Figure 7 shows schematically the forces acting on the front portion of the vehicle when the driver is braking. A braking torque Tb is applied to the front wheels. The suspension system reacts with a reaction torque Tr. Due to the reaction torque Tr, the front portion of the vehicle tends to raise and the cylinders C1, C2 extend, i.e. the rods R1, R2 slide towards the outside of the respective cylinders C1, C2.

As shown in Figure 8, during the braking phase the by-pass valve V4 is fully energized so as to be moved into the closed position and close the conduit 8. More in general, longitudinal control is active when the vehicle speed is above a preset threshold and in these conditions the by-pass valve V4 is always kept in the closed position. Independent control of the first cylinder C1 and of the second cylinder C2 is therefore allowed.

The first damping valve V1 and the second damping valve V2 also are in a fully energized status, i.e. they are completely opened. This allows fluid to flow freely from the accumulators A1, A2 towards the chambers 4 respectively of the first cylinder C1 and of the second cylinder C2, in response to movement of the rods R1, R2 which slide out of the respective cylinders C1, C2.

The common damping valve V3 is in a controlled status, i.e. it is partially opened, proportionally to the estimated longitudinal acceleration. The fluid flow from the further chambers 5 of the cylinders C1, C2 towards the common accumulator A3 is thus controlled in order to provide a damping action.

A similar behavior can be observed during the tip on phase. Hence, during the braking phase and the tip on phase, the damping action is provided by controlling the common damping valve V3. On the contrary, during the tip off phase, the damping action is provided by controlling the first damping valve V1 and the second damping valve V2.

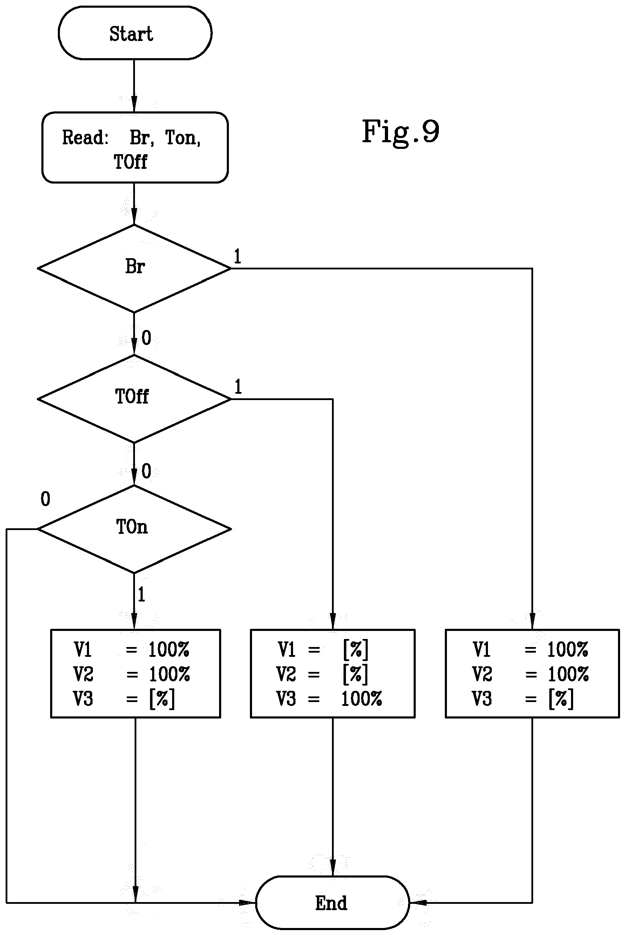

Figure 9 shows schematically how a longitudinal control strategy is carried out by the control unit in the three conditions mentioned above.

First of all, the value of three input parameters is read, namely:
- the parameter Br which indicates whether the vehicle is in the braking phase. In particular, if Br = 1 the braking phase is active, otherwise Br = 0;
- the parameter Ton which indicates whether the vehicle is in the tip on phase. In particular, if Ton = 1 the tip on phase is active, otherwise Ton = 0;
- the parameter Toff which indicates whether the vehicle is in the tip off phase. In particular, if Toff = 1 the tip off phase is active, otherwise Toff = 0.

If the condition Br = 1 is verified, which means that the vehicle is in the braking phase, then the first damping valve V1 and the second damping valve V2 are fully energized, i.e. completely opened, in order to make easy for the fluid to flow from the accumulators A1, A2 to the respective chambers 4 of the cylinders C1, C2. The common damping valve V3 is controlled, i.e. opened proportionally to the longitudinal acceleration acting on the chassis, in order to control the flow of fluid from the further chambers 5 of the cylinders C1, C2 towards the common accumulator A3 and provide a damping effect.

If the condition Br = 0 is verified, then the parameter Toff is read to check whether the tip off phase is active.

If Toff = 1, which means that the vehicle is in the tip off phase, then the common valve V3 is fully energized, i.e. moved to a fully opened position. This position of the common valve V3 allows fluid to flow from the common accumulator A3 towards the further chambers 5 of the cylinders C1, C2, in order to fill the further chambers 5 which are increasing their volume as a consequence of the rods R1, R2 moving towards the inside of the cylinders C1, C2. The first damping valve V1 and the second damping valve V2 are instead in a controlled status, i.e. they are opened proportionally to the longitudinal acceleration, in order to provide a damping action by controlling the flow of fluid from the cylinders C1, C2 towards the respective accumulators A1, A2.

If both Br = 0 and Toff = 0, then the parameter Ton is read to check whether the tip on phase is active.

If Ton = 1, which means that the vehicle is in the tip on phase, then the same procedure as in the braking phase is adopted, i.e. the first damping valve V1 and the second damping valve V2 are fully energized (or completely opened), whereas the common damping valve V3 is controlled (or partially opened) to provide a damping action.

If simultaneously Br = 0 , Toff = 0 and Ton = 0, then no action is needed since the vehicle is in standard running conditions.

The damping circuit 14 can also be controlled by the control unit according to a so-called "anti-bump control", in order to smooth motion of one or both cylinders C1 or C2 when the corresponding piston P1 or P2 is close to its end stroke position. This has the purpose of avoiding a strong impact between the piston and a wall of the corresponding cylinder, which might damage the suspension system.

In order to provide an anti-bump control strategy, a position sensor is added for each cylinder C1, C2, in order to detect position of the corresponding piston P1, P2.

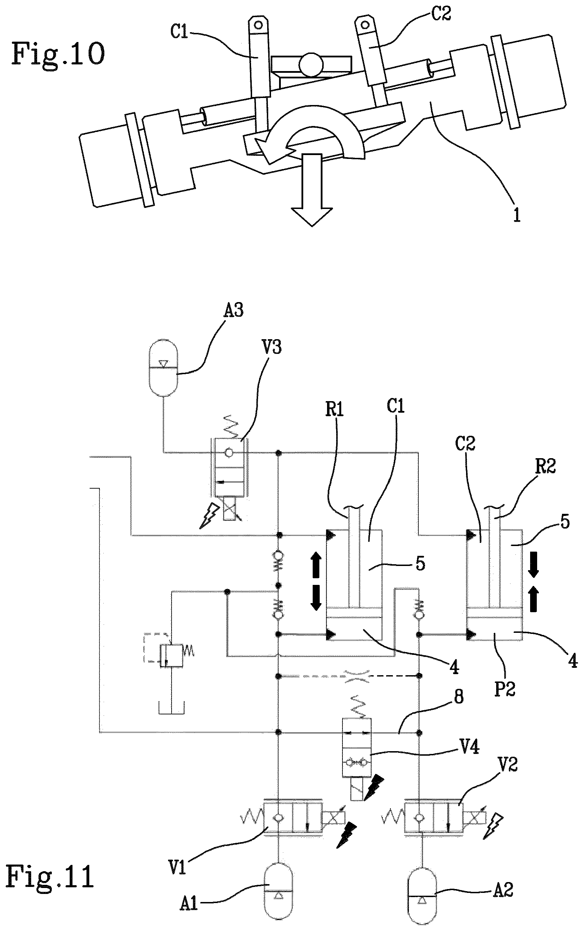

Figure 10 shows an example of a situation in which the anti-bump control strategy is adopted. In the example of Figure 10, the front right wheel of the vehicle is passing over a bump, and the right portion of the vehicle is therefore moving upwards. As a consequence, the second cylinder C2 is compressed, i.e. its rod R2 slides towards the inside of the second cylinder C2. On the other hand, the first cylinder C1 is extending, i.e. its rod R1 slides towards the outside of the first cylinder C1, and its piston P1 is closer to its end stroke position than the piston P2 of the second cylinder C2.

As shown in Figure 11, when the anti-bump control strategy works the by-pass valve V4 is in a fully energized status, i.e. in a closed position, thereby allowing the first cylinder C1 and the second cylinder C2 to be controlled independently of each other.

Since the further chamber 5 of the first cylinder C1 is reducing its volume to such an extent that the piston P1 is close to its end stroke position, the common damping valve V3 is set in a controlled status, i.e. in a partially opened position, in order to limit the flow of fluid from the further chamber 5 of the first cylinder C1 towards the third accumulator A3. Motion of the piston P1 can therefore be smoothed, in order to avoid a strong impact between the piston P1 and a wall of the first cylinder C1.

The chamber 4 of the first cylinder C1 is increasing its volume as a consequence of the expansion movement of the first cylinder C1, thereby requiring additional fluid from the first accumulator A1. The first damping valve V1 is in a fully energized status, i.e. it is completely opened, to allow fluid to flow from the first accumulator A1 to the chamber 4 of the first cylinder C1 as fast as possible.

Finally, the second damping valve V2 is in a controlled status, i.e. partially opened, in order to provide a damping action.

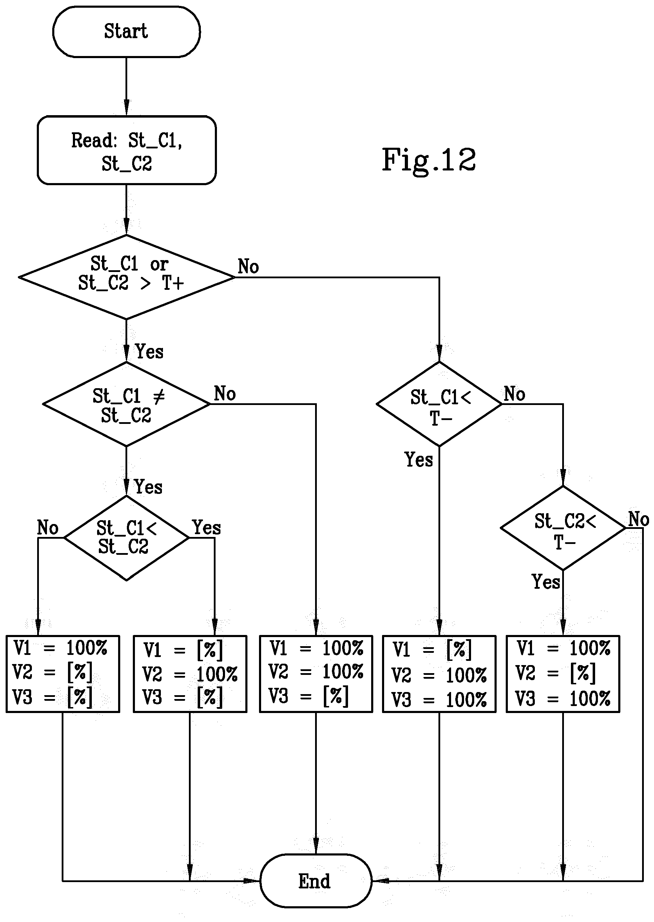

Figure 12 shows schematically how the anti-bump control strategy works.

It is stressed that, when the anti-bump control strategy is active, the bypass valve V4 is always in a fully energized status, i.e. fully closed, to allow independent control of the cylinders C1 and C2.

First of all, the required parameters are read, namely the stroke of the piston of the first cylinder C1 (which is called St_C1) and the stroke of the piston of the second cylinder C2 (which is called St_C2). These parameters, which indicate the position of the pistons P1, P2, are known from the position sensors that have been provided on the cylinders C1, C2.

An upper or extension threshold value T+ has been set as a limit acceptable value for the stroke of a piston whose rod is moving towards the outside of the corresponding cylinder. Similarly, a lower or compression threshold value T- has been chosen as a limit acceptable value for the stroke of a piston whose rod is moving towards the inside of the corresponding cylinder.

A first check is made to assess whether either the stroke St_C1 of the first piston P1 or the stroke St_C2 of the second piston P2 is greater than the extension threshold limit T+.

If this is the case, then a second check is made to assess whether the strokes St_C1 and St_C2 are different from one another.

If it is found that St_C1 ≠ St_C2, which means that the two cylinders C1 and C2 are working in a non-symmetrical condition, then a check is made to assess which is the greatest of between St_C1 and St_C2.

If it is found that St_C1 > St_C2, this means that the rod R1 of the first cylinder C1 is extending in such a manner that the corresponding piston P1 is closer to its end stroke position (in extension) than the piston P2 of the second cylinder C2. This situation corresponds to the example of Figures 10 and 11.

The first damping valve V1 is then fully energized, i.e. completely opened, to allow fluid to flow freely from the first accumulator A1 towards the chamber 4 of the first cylinder C1. The latter chamber needs more fluid due to the quick motion of the corresponding rod R1 towards the outside of the first cylinder C1.

The common damping valve V3 is in a controlled status, i.e. it is partially opened, to smooth motion of the piston P1 of the first cylinder C1 towards its end stroke position.

The second damping valve V2 is also in a controlled status, i.e. it is partially opened, in order to provide a damping action.

If on the other hand it is found that St_C1 < St_C2, i.e. the rod R2 of the second cylinder C2 is extending in such a manner that the corresponding piston P2 is closer to its end stroke position (in extension) than the piston P1 of the first cylinder C1, then the common damping valve V3 is moved into a controlled status, i.e. it is partially opened, to slow the flow of fluid from the further chamber 5 of the second cylinder C2 towards the common accumulator A3 and hence smooth motion of the piston P2 towards its end stroke position.

The second damping valve V2 is set in fully energized status, i.e. is fully opened, to allow the fluid to flow rapidly from the second accumulator A2 towards the first chamber 4 of the second cylinder C2, which is quickly increasing its volume.

The first damping valve V1 is set in a controlled status, i.e. it is partially opened, to provide a damping action.

To sum up, when one of the two pistons gets closer to its end stroke position, in an extension direction, than the other piston, the common damping valve V3 and the damping valve (chosen from between V1 and V2) associated to the chamber 4 of the cylinder whose piston is farthest from the end stroke position are set in a controlled status, i.e. partially opened. On the other hand, the damping valve (chosen from between V1 and V2) associated to the chamber 4 of the cylinder whose piston is closest to its end stroke position is fully energized to be completely opened. This allows to counteract composed movement of the axle 1, which simultaneously undergoes bouncing and rolling.

If the second check which has been described above results in St_C1 = St_C2, i.e. the pistons P1 and P2 of the cylinders C1 and C2 are moving in a symmetrical manner and are both close to their end stroke position, in an extension direction, then the common valve V3 is set to a controlled status, i.e. partially opened, to smooth simultaneously motion of the pistons P1 and P2, and avoid strong impacts between these pistons and the corresponding cylinder walls. Both the first damping valve V1 and the second damping valve V2 are fully energized, i.e. fully opened, to make easy for the fluid to flow from the accumulators A1, A2 towards the chambers 4 of the corresponding cylinder C1, C2, which are rapidly increasing their volume.

If, from the first check mentioned above, it is found that neither St_C1, nor St_C2 are greater than the expansion threshold T+, then it is checked whether the stroke St_C1 of the piston P1 of the first cylinder C1 is less than the compression threshold value T-. If this is the case, then the first damping valve V1 is set to a controlled status, i.e. partially opened, to slow the flow of fluid out of the chamber 4 of the first cylinder C1 towards the first accumulator A1 and hence smooth motion of the piston P1. The second damping valve V2 and the common damping valve V3 are on the other hand fully energized, i.e. completely opened.

If, on the other hand, it is found that the stroke St_C2 of the piston P2 of the second cylinder C2 is less than the compression threshold value T-, then the second damping valve V2 is set to a controlled status, i.e. partially opened, to control flow of fluid from the chamber 4 of the second cylinder C2 towards the second accumulator A2 and avoid a strong impact of the piston P2 against the walls of the second cylinder C2. The first damping valve V1 and the common damping valve V3 are instead fully energized, i.e. completely opened.

To sum up, when one of the pistons P1, P2 is closer than the other to its end stroke position in a compression direction, then the damping valve interposed between the chamber 4 (piston side) of the corresponding cylinder and the respective accumulator is set in a controlled status, i.e partially opened. The common damping valve V3 and the damping valve interposed between the chamber 4 of the other cylinder and the respective accumulator are fully energized, i.e. fully opened.

The damping circuit 14 allows also a vertical acceleration control strategy to be performed, e.g. the so called "Sky-Hook" control. This strategy has the purpose of reducing vertical acceleration of the chassis while the vehicle is travelling on the road, thereby improving ride quality and comfort for the driver.

In orderto perform the vertical acceleration control strategy, a dedicated accelerometer is installed on the vehicle chassis. The damping valves V1, V2, V3 are then managed with respect to the pistons velocity to obtain the desired functionality. In particular, during vertical acceleration control strategy, the damping valves V1, V2, V3 are managed at high frequency.

In conclusion, the damping circuit 14 allows a number of functions to be performed, in order to increase comfort and safety for the driver even at high speed.

## Claims

1. A suspension system for a vehicle, the suspension system comprising:
- a first cylinder (C1) and a second cylinder (C2) positionable at opposite sides of an axle (1) of the vehicle,
- a first accumulator (A1) connectable to a chamber (4) of the first cylinder (C1) by a first connecting line (L1),
- a second accumulator (A2) connectable to a chamber (4) of the second cylinder (C2) by a second connecting line (L2),
- a common accumulator (A3) connectable to a further chamber (5) of each cylinder (C1, C2),
**characterized in that** the first connecting line (L1) and the second connecting line (L2) are connected to each other by a conduit (8), a selective communication element (V4) being arranged along said conduit (8), the selective communication element (V4) being operable between an open position in which a common pressure is present inside the chambers (4), and a closed position in which the first cylinder (C1) and the second cylinder (C2) are allowed to be controlled independently of each other.

2. A suspension system according to claim 1, wherein the first connecting line (L1) and the second connecting line (L2) are connected to each other by a further conduit (9) allowing fluid communication between said chamber (4) of the first cylinder (C1) and said chamber of the second cylinder (C2) at a flow rate which is lower than the flow rate through said conduit (8) in the open position, the further conduit (9) having a narrowing in its cross section, particularly configured as an orifice (O1), in order to limit the flow rate through the further conduit (9).

3. A suspension system according to claim 1, wherein the chambers (4) of the first cylinder (C1) and of the second cylinder (C2) are located at a piston side of respectively the first cylinder (C1) and the second cylinder (C2), the further chambers (5) of the first cylinder (C1) and of the second cylinder (C2) being located at a rod side of respectively the first cylinder (C1) and the second cylinder (C2).

4. A suspension system according to claim 1, and further comprising:
- a first damping valve (V1) arranged along the first connecting line (L1) and a second damping valve (V2) arranged along the second connecting line (L2), each damping valve (V1, V2) being controlled by a control unit so as to be openable proportionally to an input signal;
- a common damping valve (V3) interposed between the common accumulator (A3) and the cylinders (C1, C2), the common damping valve (V3) being controlled by the control unit so as to be openable proportionally to an input signal.

5. A suspension system according to claim 4, wherein the damping valves (V1, V2, V3) are so controlled as to minimize rolling of a chassis of the vehicle according to an anti-rolling strategy, if lateral acceleration is detected on the chassis.

6. A suspension system according to claim 5, wherein according to the anti-rolling strategy the control unit is so programmed as to:
- close the selective communication element (V4);
- fully open the damping valve (V1, V2), selected from between the first damping valve (V1) and the second damping valve (V2), associated to the chamber (4) which is decreasing its volume due to lateral acceleration, so as to facilitate flow of fluid from said chamber (4) to the corresponding accumulator (A1, A2);
- open the common damping valve (V3) and the other damping valve (V2, V1) selected from between the first damping valve (V1) and the second damping valve (V2) to an extent depending on lateral acceleration, in order to provide a damping action.

7. A suspension system according to claim 5, wherein lateral acceleration of the chassis is estimated on the basis of steering angle and vehicle speed, or on the basis of at least one signal received from an accelerometer, or on the basis of at least one signal received from a control unit of the vehicle.

8. A suspension system according to claim 4, wherein the damping valves (V1, V2, V3) are so controlled as to minimize longitudinal acceleration of a chassis of the vehicle according to a longitudinal control strategy, and wherein according to the longitudinal control strategy the control unit is so programmed as to:
- fully open the first damping valve (V1) and the second damping valve (V2), and open the common damping valve (V3) to an extent depending on the longitudinal acceleration, if a driver is either braking the vehicle or starting to activate an accelerator;
- fully open the common damping valve (V3), and open the first damping valve (V1) and the second damping valve (V2) to an extent depending on the longitudinal acceleration, if a driver is releasing the accelerator.

9. A suspension system according to claim 8, wherein the longitudinal acceleration is estimated on the basis of at least one parameter selected from a group comprising: vehicle speed, engine torque, accelerator status, brake status, gear shift.

10. A suspension system according to claim 4, wherein the damping valves (V1, V2, V3) are so controlled as to avoid impacts between at least one piston (P1, P2) of the cylinders (C1, C2) and a wall of the corresponding cylinder (C1, C2) according to an anti-bump strategy, if said at least one piston (P1, P2) is reaching an end stroke position, the suspension system further comprising a first position sensor provided on the first cylinder (C1) for detecting position of the corresponding piston (P1), and a second position sensor provided on the second cylinder (C2) for detecting position of the corresponding piston (P2).

11. A suspension system according to claim 10, wherein, according to the anti-bump strategy, when a piston (P1, P2) gets closer to its end stroke position than the other piston (P2, P1), in an extension direction, the control unit is so programmed as to:
- close the selective communication element (V4);
- open the common damping valve (V3) and the damping valve (V1, V2), selected from between the first damping valve (V1) and the second damping valve (V2), associated to the chamber (4) of the cylinder (C1, C2) whose piston (P1, P2) is farthest from its end stroke position, to an extent depending on an input signal;
- fully open the other damping valve (V2, V1), selected from between the first damping valve (V1) and the second damping valve (V2) associated to the chamber (4) of the cylinder (C2, C1) whose piston (P2, P1) is closest to its end stroke position.

12. A suspension system according to claim 10, wherein, according to the anti-bump strategy, when the pistons (P1, P2) of both the cylinders get symmetrically close to their end stroke position, in an extension direction, the control unit is so programmed as to:
- close the selective communication element (V4);
- open the common damping valve (V3) to an extent depending on position of the pistons (P1, P2);
- fully open the first damping valve (V1) and the second damping valve (V2).

13. A suspension system according to claim 10, wherein, according to the anti-bump strategy, when a piston (P1, P2) gets closer to its end stroke position than the other piston (P2, P1), in a compression direction, the control unit is so programmed as to:
- close the selective communication element (V4);
- open the damping valve (V1, V2), selected from between the first damping valve (V1) and the second damping valve (V2), associated to the chamber (4) of the cylinder (C1, C2) whose piston (P1, P2) is closest to its end stroke position, to an extent depending on an input signal;
- fully open the common damping valve (V3) and the other damping valve (V2, V1), selected from between the first damping valve (V1) and the second damping valve (V2) associated to the chamber (4) of the cylinder (C2, C1) whose piston (P2, P1) is farthest from its end stroke position.

14. A suspension system according to claim 4, wherein the damping valves (V1, V2, V3) are so controlled as to minimize vertical acceleration of a chassis of the vehicle.

## Patentansprüche

1. Aufhängungssystem für ein Fahrzeug, wobei das Aufhängungssystem aufweist:
- einen ersten Zylinder (C1) und einen zweiten Zylinder (C2), die an gegenüberliegenden Seiten einer Achse (1) des Fahrzeugs anordenbar sind,
- einen ersten Druckspeicher (A1), der mit einer Kammer (4) des ersten Zylinders (C1) durch eine erste Verbindungsleitung (L1) verbindbar ist,
- einen zweiten Druckspeicher (A2), der mit einer Kammer (4) des zweiten Zylinders (C2) durch eine zweite Verbindungsleitung (L2) verbindbar ist,
- einen gemeinsamen Druckspeicher (A3), der mit einer weiteren Kammer (5) jedes Zylinders (C1, C2) verbindbar ist,
**dadurch gekennzeichnet, dass**
die erste Verbindungsleitung (L1) und die zweite Verbindungsleitung (L2) miteinander durch eine Leitung (8) verbunden sind, wobei ein wahlweises Verbindungselement (V4) entlang der Leitung (8) angeordnet ist, wobei das wahlweise Verbindungselement (V4) zwischen einer offenen Stellung, in dem ein allgemeiner Druck innerhalb der Kammern (4) vorherrscht, und einer geschlossenen Position betreibbar ist, in der der erste Zylinder (C1) und der zweite Zylinder (C2) unabhängig voneinander gesteuert werden können.

2. Aufhängungssystem nach Anspruch 1, wobei die erste Verbindungsleitung (L1) und die zweite Verbindungsleitung (L2) miteinander durch eine weitere Leitung (9) verbunden sind, die eine Fluidverbindung zwischen der Kammer (4) des ersten Zylinders (C1) und der Kammer des zweiten Zylinders (C2) bei einer Durchflussrate ermöglicht, die niedriger ist als die Durchflussrate durch die Leitung (8) in der offenen Stellung, wobei die weitere Leitung (9) eine Verengung in ihrem Querschnitt aufweist, die insbesondere als eine Öffnung (O1) eingerichtet ist, um die Durchflussrate durch die weitere Leitung (9) zu begrenzen.

3. Aufhängungssystem nach Anspruch 1, wobei die Kammern (4) des ersten Zylinders (C1) und des zweiten Zylinders (C2) auf einer Kolbenseite des ersten Zylinders (C1) bzw. des zweiten Zylinders (C2) angeordnet sind, wobei die weiteren Kammern (5) des ersten Zylinders (C1) und des zweiten Zylinders (C2) auf einer Kolbenstangenseite des ersten Zylinders (C1) bzw. des zweiten Zylinders (C2) angeordnet sind.

4. Aufhängungssystem nach Anspruch 1, das weiterhin aufweist:
- ein erstes Dämpfungsventil (V1), das entlang der ersten Verbindungsleitung (L1) angeordnet ist, und ein zweites Dämpfungsventil (V2), das entlang der zweiten Verbindungsleitung (L2) angeordnet ist, wobei jedes Dämpfungsventil (V1, V2) durch eine Steuereinheit gesteuert ist, um proportional zu einem Eingabesignal geöffnet zu werden;
- ein gemeinsames Dämpfungsventil (V3), das zwischen dem gemeinsamen Druckspeicher (A3) und den Zylindern (C1, C2) angeordnet ist, wobei das gemeinsame Dämpfungsventil (V3) durch die Steuereinheit gesteuert wird, um proportional zu einem Eingabesignal geöffnet werden zu können.

5. Aufhängungssystem nach Anspruch 4, wobei die Dämpfungsventile (V1, V2, V3) derart gesteuert werden, dass ein Rollen eines Fahrwerks des Fahrzeugs entsprechend einer Anti-Roll-Strategie minimiert wird, wenn eine seitliche Beschleunigung an dem Fahrwerk erkannt wird.

6. Aufhängungssystem nach Anspruch 5, wobei gemäß der Anti-Roll-Strategie die Steuereinheit derart programmiert ist, um:
- das wahlweise Kommunikationselement (V4) zu schließen;
- das Dämpfungsventil (V1, V2), das zwischen dem ersten Dämpfungsventil (V1) und dem zweiten Dämpfungsventil (V2) ausgewählt wurde, das mit der Kammer (4) verbunden ist, deren Volumen aufgrund der seitlichen Beschleunigung abnimmt, vollständig zu öffnen, um den Fluidfluss aus der Kammer (4) zu dem entsprechenden Druckspeicher (A1, A2) zu ermöglichen;
- das gemeinsame Dämpfungsventil (V3) und das andere Dämpfungsventil (V2, V1), das aus dem ersten Dämpfungsventil (V1) und dem zweiten Dämpfungsventil (V2) ausgewählt wurde, in einem Maß entsprechend der seitlichen Beschleunigung zu öffnen, um eine Dämpfungswirkung bereitzustellen.

7. Aufhängungssystem nach Anspruch 5, wobei die seitliche Beschleunigung des Fahrwerks aufgrund des Steuerwinkels und der Fahrzeuggeschwindigkeit oder aufgrund von mindestens einem Signal geschätzt wird, das von einem Beschleunigungsmesser empfangen wird, oder aufgrund von mindestens einem Signal, das von einer Steuereinheit des Fahrzeugs empfangen wird.

8. Aufhängungssystem nach Anspruch 4, wobei die Dämpfungsventile (V1, V2, V3) derart gesteuert werden, um eine Längsbeschleunigung eines Fahrgestells des Fahrzeugs gemäß einer Längssteuerungsstrategie zu minimieren, und wobei gemäß der Längssteuerungsstrategie die Steuereinheit derart programmiert ist, um:
- das erste Dämpfungsventil (V1) und das zweite Dämpfungsventil (V2) vollständig zu öffnen und das gemeinsame Dämpfungsventil (V3) in einem Maß abhängig von der Längsbeschleunigung zu öffnen, wenn ein Fahrer das Fahrzeug entweder abbremst oder beginnt, ein Fahrpedal zu betätigen;
- das gemeinsame Dämpfungsventil (V3) vollständig zu öffnen und das erste Dämpfungsventil (V1) und das zweite Dämpfungsventil (V2) in einem Maß in Abhängigkeit der Längsbeschleunigung zu öffnen, wenn ein Fahrer das Fahrpedal freigibt.

9. Aufhängungssystem nach Anspruch 8, wobei die Längsbeschleunigung aufgrund von mindestens einem Parameter geschätzt wird, der aus einer Gruppe ausgewählt ist, die aufweist: Fahrzeuggeschwindigkeit, Motordrehmoment, Fahrpedalstatus, Bremsstatus, Schalthebel.

10. Aufhängungssystem nach Anspruch 4, wobei die Dämpfungsventile (V1, V2, V3) derart gesteuert sind, um ein Aufprallen zwischen mindestens einem Kolben (P1, P2) der Zylinder (C1, C2) und einer Wand des entsprechenden Zylinders (C1, C2) entsprechend einer Anti-Rüttel-Strategie zu vermeiden, wenn mindestens ein Kolben (P1, P2) eine Endhubstellung erreicht, wobei das Aufhängungssystem des Weiteren einen ersten Positionssensor aufweist, der auf dem ersten Zylinder (C1) zum Erfassen der Position des entsprechenden Kolbens (P1) vorgesehen ist und einen zweiten Positionssensor aufweist, der auf dem zweiten Zylinder (C2) zum Erfassen der Position des entsprechenden Kolbens (P2) vorgesehen ist.

11. Aufhängungssystem nach Anspruch 10, wobei entsprechend der Anti-Rüttel-Strategie, wenn ein Kolben (P1, P2) in einer Erstreckungsrichtung seiner Endhubposition näher kommt als der andere Kolben (P2, P1), die Steuereinheit derart programmiert ist, um:
- das wahlweise Kommunikationselement (V4) zu schließen;
- das gemeinsame Dämpfungsventil (V3) und das Dämpfungsventil (V1, V2), das aus dem ersten Dämpfungsventil (V1) und dem zweiten Dämpfungsventil (V2) ausgewählt ist, das zu der Kammer (4) des Zylinders (C1, C2) gehört, dessen Kolben (P1, P2) von seiner Endhubposition am weitesten entfernt ist, in einem Maß in Abhängigkeit eines Eingangssignals zu öffnen;
- das andere Dämpfungsventil (V2, V1), das zwischen dem ersten Dämpfungsventil (V1) und dem zweiten Dämpfungsventil (V2) ausgewählt ist, das zu der Kammer (4) des Zylinders (C2, C1) gehört, dessen Kolben (P2, P1) seiner Endhubstellung am nächsten ist, vollständig zu öffnen.

12. Aufhängungssystem nach Anspruch 10, wobei gemäß der Anti-Rüttel-Strategie, wenn die Kolben (P1, P2) von beiden Zylindern symmetrisch nahe an ihre Endhubstellung in einer Erweiterungsrichtung kommen, die Steuereinheit derart programmiert ist, um:
- das wahlweise Kommunikationselement (V4) zu schließen;
- das gemeinsame Dämpfungsventil (V3) in einem Maß entsprechend der Stellung der Kolben (P1, P2) zu öffnen;
- das erste Dämpfungsventil (V1) und das zweite Dämpfungsventil (V2) vollständig zu öffnen.

13. Aufhängungssystem nach Anspruch 10, wobei gemäß der Anti-Rüttel-Strategie, wenn ein Kolben (P1, P2) seiner Endhubposition näher kommt als der andere Kolben (P2, P1) in einer Komprimierungsrichtung, die Steuereinheit derart programmiert ist, um:
- das wahlweise Kommunikationselement (V4) zu schließen;
- das Dämpfungsventil (V1, V2), das zwischen dem ersten Dämpfungsventil (V1) und dem zweiten Dämpfungsventil (V2) ausgewählt ist, das mit der Kammer (4) des Zylinders (C1, C2) verbunden ist, dessen Kolben (P1, P2) seiner Endhubposition am nächsten ist, in einem Maß entsprechend eines Eingabesignals zu öffnen;
- das gemeinsame Dämpfungsventil (V3) und das andere Dämpfungsventil (V2, V1), das zwischen dem ersten Dämpfungsventil (V1) und dem zweiten Dämpfungsventil (V2) ausgewählt ist, das zu der Kammer (4) des Zylinders (C2, C1) gehört, dessen Kolben (P2, P1) von seiner Endhubposition am weitesten entfernt ist, vollständig zu öffnen.

14. Aufhängungssystem nach Anspruch 4, wobei die Dämpfungsventile (V1, V2, V3) derart gesteuert werden, um eine vertikale Beschleunigung eines Fahrgestells des Fahrzeugs zu minimieren.

## Revendications

1. Système de suspension pour véhicule, le système de suspension comprenant :
- un premier cylindre (C1) et un deuxième cylindre (C2) positionnable à des extrémités opposées d'un essieu (1) du véhicule,
- un premier accumulateur (A1) pouvant être relié à une chambre (4) du premier cylindre (C1) par une première ligne de connexion (L1),
- un deuxième accumulateur (A2) pouvant être relié à une chambre (4) du deuxième cylindre (C2) par une deuxième ligne de connexion (L2),
- un accumulateur commun (A3) pouvant être relié à une chambre supplémentaire (5) de chaque cylindre (C1, C2),
**caractérisé en ce que** la première ligne de connexion (L1) et la deuxième ligne de connexion (L2) sont reliées l'une à l'autre par un conduit (8), un élément de communication sélective (V4) étant disposé le long dudit conduit (8), l'élément de communication sélective (V4) étant utilisable entre une position ouverte dans laquelle une pression commune est présente à l'intérieur des chambres (4), et une position fermée dans laquelle le premier cylindre (C1) et le deuxième cylindre (C2) peuvent être commandés indépendamment l'un de l'autre.

2. Système de suspension selon la revendication 1, dans lequel la première ligne de connexion (L1) et la deuxième ligne de connexion (L2) sont reliées l'une à l'autre par un conduit supplémentaire (9) permettant une communication fluidique entre ladite chambre (4) du premier cylindre (C1) et ladite chambre du deuxième cylindre (C2) à un débit qui est inférieur au débit à travers ledit conduit (8) en position ouverte, le conduit supplémentaire (9) ayant un rétrécissement de sa section, particulièrement configuré comme orifice (01), afin de limiter le débit à travers le conduit supplémentaire (9).

3. Système de suspension selon la revendication 1, dans lequel les chambres (4) du premier cylindre (C1) et du deuxième cylindre (C2) sont situées du côté du piston du premier cylindre (C1) et, respectivement, du deuxième cylindre (C2), les chambres supplémentaires (5) du premier cylindre (C1) et du deuxième cylindre (C2) étant situées d'un côté de la tige du premier cylindre (C1) et, respectivement, du deuxième cylindre (C2).

4. Système de suspension selon la revendication 1, comprenant en outre :
- une première soupape d'amortissement (V1) disposée le long de la première ligne de connexion (L1) et une deuxième soupape d'amortissement (V2) disposée le long de la deuxième ligne de connexion (L2), chaque soupape d'amortissement (VI, V2) étant commandée par une unité de contrôle-commande afin de pouvoir être ouverte proportionnellement à un signal d'entrée ;
- une soupape d'amortissement commune (V3) interposée entre l'accumulateur commun (A3) et les cylindres (C1, C2), la soupape d'amortissement commune (V3) étant commandée par l'unité de contrôle-commande afin de pouvoir être ouverte proportionnellement à un signal d'entrée.

5. Système de suspension selon la revendication 4, dans lequel les vannes d'amortissement (V1, V2, V3) sont commandées de façon à minimiser le roulis d'un châssis du véhicule suivant une stratégie anti-roulis, si une accélération latérale est détectée sur le châssis.

6. Système de suspension selon la revendication 5, dans lequel, suivant la stratégie anti-roulis, l'unité de contrôle-commande est programmée afin de permettre :
- de fermer l'élément de communication sélective (V4) ;
- d'ouvrir complètement la soupape d'amortissement (V1, V2), sélectionnée entre la première soupape d'amortissement (V1) et la deuxième soupape d'amortissement (V2), associée à la chambre (4) qui diminue son volume à cause de l'accélération latérale, de façon à faciliter la circulation du fluide de ladite chambre (4) vers l'accumulateur correspondant (A1, A2) ;
- d'ouvrir la soupape d'amortissement commune (V3) et l'autre soupape d'amortissement (V2, V1) sélectionnée entre la première soupape d'amortissement (V1) et la deuxième soupape d'amortissement (V2), dans une mesure dépendant de l'accélération latérale, de façon à assurer une action d'amortissement.

7. Système de suspension selon la revendication 5, dans lequel l'accélération latérale du châssis est estimée sur la base de l'angle de conduite et de la vitesse du véhicule, ou sur la base d'au moins un signal reçu d'un accéléromètre, ou sur la base d'au moins un signal reçu d'une unité de contrôle-commande du véhicule.

8. Système de suspension selon la revendication 4, dans lequel les vannes d'amortissement (V1, V2, V3) sont commandées de façon à minimiser l'accélération longitudinale d'un châssis du véhicule suivant une stratégie de contrôle-commande longitudinale, et dans lequel, suivant la stratégie de contrôle-commande longitudinale, l'unité de contrôle-commande est programmée de façon à :
- ouvrir complètement la première soupape d'amortissement (V1) et la deuxième soupape d'amortissement (V2), et ouvrir la soupape d'amortissement commune (V3), dans une mesure dépendant de l'accélération longitudinale, si un conducteur soit est en train de ralentir le véhicule soit est en train de démarrer l'activation de l'accélérateur;
- ouvrir complètement la soupape d'amortissement commune (V3) et ouvrir la première soupape d'amortissement (V1), et la deuxième soupape d'amortissement (V2), dans une mesure dépendant de l'accélération longitudinale, si un conducteur est en train de libérer l'accélérateur.

9. Système de suspension selon la revendication 8, dans lequel l'accélération longitudinale est estimée sur la base d'au moins un paramètre sélectionné parmi un groupe comprenant : la vitesse du véhicule, le couple moteur, l'état de l'accélérateur, l'état des freins, le rapport de vitesse.

10. Système de suspension selon la revendication 4, dans lequel les vannes d'amortissement (V1, V2, V3) sont commandées de façon à éviter les chocs entre au moins un piston (P1, P2) des cylindres (C1, C2) et une paroi du cylindre correspondant (C1, C2) suivant une stratégie anti-choc, si au moins un piston (P1, P2) atteint une position de fin de course, le système de suspension comprenant en outre un premier capteur de position prévu sur le premier cylindre (C1) permettant de détecter la position du piston correspondant (P1), et un deuxième capteur de position prévu sur le deuxième cylindre (C2) permettant de détecter la position du piston correspondant (P2).

11. Système de suspension selon la revendication 10, dans lequel, suivant la stratégie anti-choc, lorsqu'un piston (P1, P2) se rapproche plus de sa position de fin de course que l'autre piston (P2, P1), dans le sens de l'extension, l'unité de contrôle-commande est programmée de façon à :
- fermer l'élément de communication sélective (V4) ;
- ouvrir la soupape d'amortissement commune (V3) et la soupape d'amortissement (V1, V2), sélectionnée entre la première soupape d'amortissement (V1) et la deuxième soupape d'amortissement (V2), associée à la chambre (4) du cylindre (C1, C2) dont le piston (P1, P2) est le plus loin de sa position de fin de course, dans une mesure dépendant d'un signal d'entrée ;
- ouvrir complètement l'autre soupape d'amortissement commune (V2, V1), sélectionnée entre la première soupape d'amortissement (V1) et la deuxième soupape d'amortissement (V2), associée à la chambre (4) du cylindre (C2, C1) dont le piston (P2, P1) est le plus proche de sa position de fin de course.

12. Système de suspension selon la revendication 10, dans lequel, suivant la stratégie antichoc, lorsque les pistons (P1, P2) des deux cylindres arrivent symétriquement proches de leur position de fin de course, dans la sens de l'extension, l'unité de contrôle-commande est programmée de façon à :
- de fermer l'élément de communication sélective (V4) ;
- ouvrir la soupape d'amortissement commune (V3) dans une mesure dépendant de la position des pistons (P1, P2) ;
- ouvrir complètement la première soupape d'amortissement (V1) et la deuxième soupape d'amortissement (V2).

13. Système de suspension selon la revendication 10, dans lequel, suivant la la stratégie antichoc, lorsqu'un piston (P1, P2) se rapproche plus de sa position de fin de course que l'autre piston (P2, P1), dans le sens de la compression, l'unité de contrôle-commande est programmée de façon à :
- fermer l'élément de communication sélective (V4) ;
- ouvrir la soupape d'amortissement (V1, V2), sélectionnée entre la première soupape d'amortissement (V1) et la deuxième soupape d'amortissement (V2), associée à la chambre (4) du cylindre (C1, C2) dont le piston (P1, P2) est le plus proche de sa position de fin de course, dans une mesure dépendant d'un signal d'entrée ;
- ouvrir complètement la soupape d'amortissement commune (V3) et l'autre soupape d'amortissement (V2, V1), sélectionnée entre la première soupape d'amortissement (V1) et la deuxième soupape d'amortissement (V2), associée à la chambre (4) du cylindre (C2, C1) dont le piston (P2, P1) est le plus loin de sa position de fin de course.

14. Système de suspension selon la revendication 4, dans lequel les vannes d'amortissement (V1, V2, V3) sont commandées de façon à minimiser l'accélération verticale du châssis du véhicule.
